# EUROPEAN PATENT APPLICATION

(11) **EP 4 328 764 A1**
(43) Date of publication of application: **28.02.2024**
(21) Application number: 22192509.2
(22) Date of filing: 26.08.2022
(51) Int. Cl.: G06F 16/93

(54) **ARTIFICIAL INTELLIGENCE-BASED SYSTEM AND METHOD FOR IMPROVING SPEED AND QUALITY OF WORK ON LITERATURE REVIEWS**

(71) Applicant: EVIDENCE PRIME Sp. z o.o., 30-056 Krakow (PL)
(72) Inventor: Kunstman, Pawel, 30-133 Krakow (PL); Nowak, Artur, 30-056 Krakow (PL); Kulesza, Jakub, 30-532 Krakow (PL); Czyz, Iga, 80-768 Gdansk (PL); Brozek, Jan, 30-065 Krakow (PL); Borowiack, Ewa, 30-084 Krakow (PL)
(74) Representative: JD&P Patent Attorneys Joanna Dargiewicz & Partners

(57) **Abstract**

An Al-based system and method for facilitating management of threats for improving speed and quality of work on literature reviews is disclosed. The method includes receiving a study protocol from one or more electronic devices associated with a reviewer, obtaining the set of documents based on the received study protocol by using one or more relevant search engines, and sorting the obtained set of documents in an order of relevance. The method includes determining one or more relevant fragments of each of the obtained set of documents, overlaying the determined one or more relevant fragments with one of: one or more color highlights and one or more visual indicators and outputting the overlaid one or more relevant fragments on user interface screen of the one or more electronic devices associated with the reviewer.

## Description

### FIELD OF INVENTION

Embodiments of the present disclosure relate to literature review and more particularly relates to an Artificial Intelligence (AI)-based system and method for improving speed and quality of work on literature reviews.

### BACKGROUND

In literature reviews, users such as reviewers or researchers are required to analyse a very large body of evidence produced by literature search engines, such as pubmed.org, patent.google.com, legal search engines and the like to select the documents that actually fit boundaries of the review (a review protocol), and then extract the relevant data from the text. The selection phase is called "screening", the latter - "data extraction". Generally, screening is done in two sub-phases i.e., a "title and abstract screening" (TA screening), which aims at removing majority of non-matching documents relatively fast and a "full-text screening" (FT screening), where the reviewers go through the whole bodies of a set of documents to verify if they include the important information. Further, both screening and data extraction are often very laborious processes, especially in systematic reviews, that must find every relevant document, not only the e.g., top 20% - done by two different people processing the same list of documents in order to find any discrepancies between their decisions. This approach doubles the work, but drastically improves the quality of the review, by eliminating human errors. Generally, systematic reviews are most typically used in defining the medical guidelines, where any errors or omissions of important documents may cost human lives. Thus, any help to improve the speed and accuracy of the reviews is utmost important.

Conventionally, the literature reviews required an overwhelming amount of human work, to filter out the actual body of evidence from the very large sets of results produced by the literature databases, such as Pubmed, Ovid, Medline etc., due to a requirement that the search strategy must not miss any potentially pivotal documents that may be found in the so-called long tail of the search. This requirement is very different from the way the popular online search engines, such as Google or Bing, work, is crucial for the literature reviews and for producing meaningful recommendations based on the review, but makes the review process very resource and labor intensive. In recent years, the advancements in machine learning and the Natural Language Processing (NLP) allowed for a number of optimizations in the literature reviews, which makes them faster and less labor intensive. Further, via utilization of semantic language models, it is possible to implement better prioritization of the documents in the queue, decrease the number of duplicates and reject the documents that are obviously out of scope in some cases. However, the conventional mechanisms still require a human to review most of the documents.

Hence, there is a need for an improved AI-based system and method for improving speed and quality of work on literature reviews, in order to address the aforementioned issues.

### SUMMARY

This summary is provided to introduce a selection of concepts, in a simple manner, which is further described in the detailed description of the disclosure. This summary is neither intended to identify key or essential inventive concepts of the subject matter nor to determine the scope of the disclosure.

In accordance with an embodiment of the present disclosure, an Artificial Intelligence (AI)-based computing system for improving speed and quality of work on literature reviews is disclosed. The AI-based computing system includes one or more hardware processors and a memory coupled to the one or more hardware processors. The memory includes a plurality of modules in the form of programmable instructions executable by the one or more hardware processors. The plurality of modules include a data receiver module configured to receive a study protocol from one or more electronic devices associated with a reviewer. The study protocol defines one or more terms and one or more concepts to search for a set of documents. The plurality of modules include a result obtaining module configured to obtain the set of documents based on the received study protocol by using one or more relevant search engines. The plurality of modules also include a document organizer module configured to sort the obtained set of documents in an order of relevance based on the received study protocol, content, context of each of the obtained set of documents and reviewer's preferences by using a document management based-AI model. The plurality of modules include an element determination module configured to determine one or more relevant fragments of each of the obtained set of documents based on the received study protocol, the content, the context of each of the obtained set of documents, relevance of phrases to the received study protocol, and a set of keywords defined by the reviewer by using at least one of: the document management based-AI model and rule-based inference. Further, the plurality of modules include an element indication module configured to overlay the determined one or more relevant fragments with one of: one or more color highlights and one or more visual indicators. The one or more visual indicators comprise icons, underscores, call-outs, side notes, arrows, and lines. The plurality of modules also include a data output module configured to output the overlaid one or more relevant fragments on the user interface screen of the one or more electronic devices associated with the reviewer.

In accordance with another embodiment of the present disclosure, an AI-based method for improving speed and quality of work on literature reviews is disclosed. The AI-based method includes receiving a study protocol from one or more electronic devices associated with a reviewer. The study protocol defines one or more terms and one or more concepts to search for a set of documents. The AI-based method further includes obtaining the set of documents based on the received study protocol by using one or more relevant search engines. Further, the AI-based method includes sorting the obtained set of documents in an order of relevance based on the received study protocol, content, context of each of the obtained set of documents and reviewer's preferences by using a document management based-AI model. Also, the AI-based method includes determining one or more relevant fragments of each of the obtained set of documents based on the received study protocol, the content, the context of each of the obtained set of documents, relevance of phrases to the received study protocol, and a set of keywords defined by the reviewer by using at least one of: the document management based-AI model and rule-based inference. Furthermore, the AI-based method includes overlaying the determined one or more relevant fragments with one of: one or more color highlights and one or more visual indicators. The one or more visual indicators comprise icons, underscores, call-outs, side notes, arrows, and lines. Further, the AI-based method includes outputting the overlaid one or more relevant fragments on the user interface screen of the one or more electronic devices associated with the reviewer.

To further clarify the advantages and features of the present disclosure, a more particular description of the disclosure will follow by reference to specific embodiments thereof, which are illustrated in the appended figures. It is to be appreciated that these figures depict only typical embodiments of the disclosure and are therefore not to be considered limiting in scope. The disclosure will be described and explained with additional specificity and detail with the appended figures.

### BRIEF DESCRIPTION OF DRAWINGS

The disclosure will be described and explained with additional specificity and detail with the accompanying figures in which:
**FIG. 1** is a block diagram illustrating an exemplary computing environment for improving speed and quality of work on literature reviews, in accordance with an embodiment of the present disclosure;
**FIG. 2** is a block diagram illustrating an exemplary Artificial Intelligence (AI)-based computing system for improving speed and quality of work on literature reviews, in accordance with an embodiment of the present disclosure;
**FIGs. 3A** - **3G** are graphical user interface screen of the AI-based computing system for improving speed and quality of work on literature reviews, in accordance with an embodiment of the present disclosure; and
**FIG. 4** is a process flow diagram illustrating an exemplary AI-based method for improving speed and quality of work on literature reviews, in accordance with an embodiment of the present disclosure.

Further, those skilled in the art will appreciate that elements in the figures are illustrated for simplicity and may not have necessarily been drawn to scale. Furthermore, in terms of the construction of the device, one or more components of the device may have been represented in the figures by conventional symbols, and the figures may show only those specific details that are pertinent to understanding the embodiments of the present disclosure so as not to obscure the figures with details that will be readily apparent to those skilled in the art having the benefit of the description herein.

### DETAILED DESCRIPTION OF THE DISCLOSURE

For the purpose of promoting an understanding of the principles of the disclosure, reference will now be made to the embodiment illustrated in the figures and specific language will be used to describe them. It will nevertheless be understood that no limitation of the scope of the disclosure is thereby intended. Such alterations and further modifications in the illustrated system, and such further applications of the principles of the disclosure as would normally occur to those skilled in the art are to be construed as being within the scope of the present disclosure. It will be understood by those skilled in the art that the foregoing general description and the following detailed description are exemplary and explanatory of the disclosure and are not intended to be restrictive thereof.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

The terms "comprise", "comprising", or any other variations thereof, are intended to cover a non-exclusive inclusion, such that one or more devices or sub-systems or elements or structures or components preceded by "comprises... a" does not, without more constraints, preclude the existence of other devices, sub-systems, additional sub-modules. Appearances of the phrase "in an embodiment", "in another embodiment" and similar language throughout this specification may, but not necessarily do, all refer to the same embodiment.

Unless otherwise defined, all technical and scientific terms used herein have the same meaning as commonly understood by those skilled in the art to which this disclosure belongs. The system, methods, and examples provided herein are only illustrative and not intended to be limiting.

A computer system (standalone, client or server computer system) configured by an application may constitute a "module" (or "subsystem") that is configured and operated to perform certain operations. In one embodiment, the "module" or "subsystem" may be implemented mechanically or electronically, so a module includes dedicated circuitry or logic that is permanently configured (within a special-purpose processor) to perform certain operations. In another embodiment, a "module" or "subsystem" may also comprise programmable logic or circuitry (as encompassed within a general-purpose processor or other programmable processor) that is temporarily configured by software to perform certain operations.

Accordingly, the term "module" or "subsystem" should be understood to encompass a tangible entity, be that an entity that is physically constructed, permanently configured (hardwired) or temporarily configured (programmed) to operate in a certain manner and/or to perform certain operations described herein.

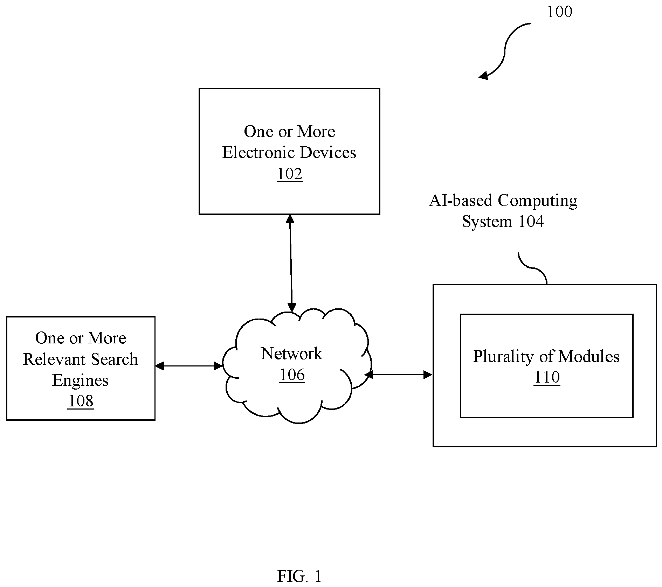

Referring now to the drawings, and more particularly to **FIGs. 1A** through **FIG. 4**, where similar reference characters denote corresponding features consistently throughout the figures, there are shown preferred embodiments and these embodiments are described in the context of the following exemplary system and/or method.

**FIG. 1** is a block diagram illustrating an exemplary computing environment 100 for improving speed and quality of work on literature reviews, in accordance with an embodiment of the present disclosure. According to **FIG. 1**, the computing environment 100 includes one or more electronic devices 102 associated with a reviewer communicatively coupled to an AI-based computing system 104 via a network 106. The one or more electronic devices 102 are used by the reviewer to provide a study protocol to the AI-based computing system 104. In an embodiment of the present disclosure, the study protocol defines one or more terms and one or more concepts to search for a set of documents. The one or more electronic devices 102 are used to receive an overlaid one or more relevant fragments from the AI-based computing system 104. In an exemplary embodiment of the present disclosure, the one or more electronic devices 102 may include a laptop computer, desktop computer, tablet computer, smartphone, wearable device, smart watch, and the like. In an embodiment of the present disclosure, the AI-based computing system 104 is hosted on a central server, such as a cloud server or a remote server. Further, the network 106 may be the internet or any other wireless network.

Further, the computing environment 100 includes one or more relevant search engines 108 communicatively coupled to the AI-based computing system 104 via the network 106. The one or more relevant search engines 108 are used to obtain the set of documents based on the received study protocol.

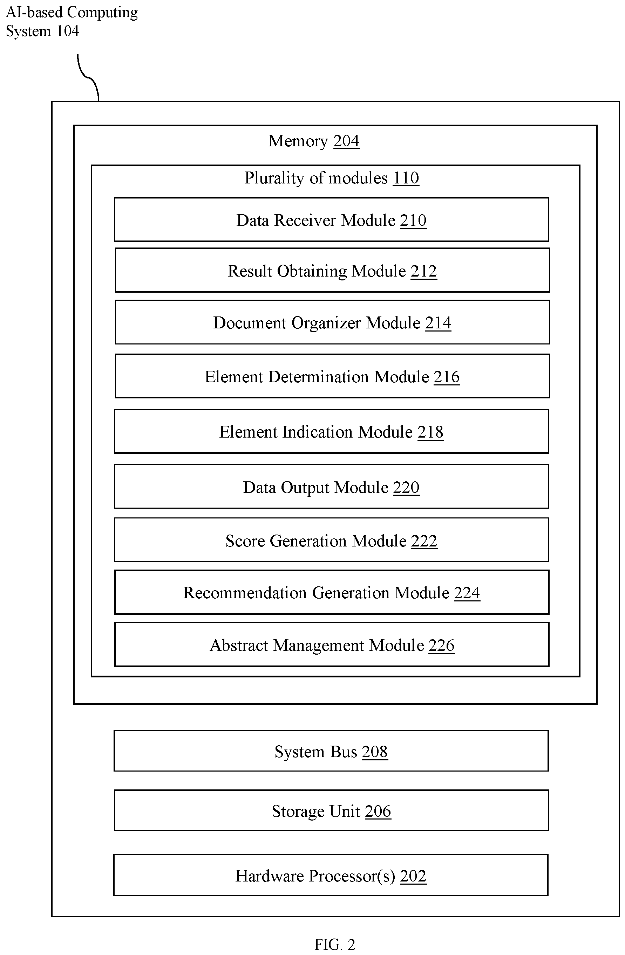

Furthermore, the one or more electronic devices 102 include a local browser, a mobile application or a combination thereof. The reviewer may use a web application via the local browser, the mobile application or a combination thereof to communicate with the AI-based computing system 104. In an exemplary embodiment of the present disclosure, the mobile application may be compatible with any mobile operating system, such as android, iOS, and the like. In an embodiment of the present disclosure, the AI-based computing system 104 includes a plurality of modules 110. Details on the plurality of modules 110 have been elaborated in subsequent paragraphs of the present description with reference to **FIG. 2****.**

In an embodiment of the present disclosure, the AI-based computing system 104 is configured to receive the study protocol from the one or more electronic devices 102 associated with the reviewer. Further, the AI-based computing system 104 obtains the set of documents based on the received study protocol by using the one or more relevant search engines 108. The AI-based computing system 104 sorts the obtained set of documents in an order of relevance based on the received study protocol, content, context of each of the obtained set of documents and reviewer's preferences by using a document management based-AI model. Furthermore, the AI-based computing system 104 determines one or more relevant fragments of each of the obtained set of documents based on the received study protocol, the content, the context of each of the obtained set of documents, relevance of phrases to the received study protocol, and a set of keywords defined by the reviewer by using the document management based-AI model, rule-based inference or a combination thereof. The AI-based computing system 104 overlays the determined one or more relevant fragments with one or more color highlights or one or more visual indicators. The AI-based computing system 104 outputs the overlaid one or more relevant fragments on the user interface screen of the one or more electronic devices 102 associated with the reviewer.

**FIG. 2** is a block diagram illustrating an exemplary AI-based computing system 104 for improving speed and quality of work on literature reviews, in accordance with an embodiment of the present disclosure. Further, the AI-based computing system 104 includes one or more hardware processors 202, a memory 204 and a storage unit 206. The one or more hardware processors 202, the memory 204 and the storage unit 206 are communicatively coupled through a system bus 208 or any similar mechanism. The memory 204 comprises the plurality of modules 110 in the form of programmable instructions executable by the one or more hardware processors 202. Further, the plurality of modules 110 includes a data receiver module 210, a result obtaining module 212, a document organizer module 214, an element determination module 216, an element indication module 218, a data output module 220, a score generation module 222, a recommendation generation module 224, and an abstract management module 226.

The one or more hardware processors 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The one or more hardware processors 202 may also include embedded controllers, such as generic or programmable logic devices or arrays, application specific integrated circuits, single-chip computers, and the like.

The memory 204 may be non-transitory volatile memory and non-volatile memory. The memory 204 may be coupled for communication with the one or more hardware processors 202, such as being a computer-readable storage medium. The one or more hardware processors 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes the plurality of modules 110 stored in the form of machine-readable instructions on any of the above-mentioned storage media and may be in communication with and executed by the one or more hardware processors 202.

In an embodiment of the present disclosure, the storage unit 206 may be a microchip. In another embodiment of the present disclosure, the storage unit 206 may be a cloud storage. The storage unit 206 may store the received study protocol, the set of documents, the one or more relevant fragments, a probability score for each of the obtained set of documents, one or more recommendations and the like.

The data receiver module 210 is configured to receive the study protocol from the one or more electronic devices 102 associated with the reviewer. In an embodiment of the present disclosure, the study protocol defines the one or more terms and the one or more concepts to search for the set of documents. In an exemplary embodiment of the present disclosure, the one or more electronic devices 102 may include a laptop computer, desktop computer, tablet computer, smartphone, wearable device, smart watch, and the like.

The result obtaining module 212 is configured to obtain the set of documents based on the received study protocol by using the one or more relevant search engines 108.

The document organizer module 214 is configured to sort the obtained set of documents in an order of relevance based on the received study protocol, content, context of each of the obtained set of documents and reviewer's preferences by using a document management based-AI model.

The element determination module 216 is configured to determine one or more relevant fragments of each of the obtained set of documents based on the received study protocol, the content, the context of each of the obtained set of documents, relevance of phrases to the received study protocol, and a set of keywords defined by the reviewer by using the document management based-AI model, rule-based inference, or a combination thereof. In an embodiment of the present disclosure, the one or more relevant fragments have the highest likelihood to influence a decision of the reviewer to include or exclude a document in or from a body of evidence. The one or more relevant fragments have the highest likelihood to influence a decision of the reviewer to select a fragment for data extraction.

The element indication module 218 is configured to overlay the determined one or more relevant fragments with one or more color highlights or one or more visual indicators. In an exemplary embodiment of the present disclosure, the one or more visual indicators include icons, underscores, call-outs, side notes, arrows, and lines.

The data output module 220 is configured to output the overlaid one or more relevant fragments on the user interface screen of the one or more electronic devices 102 associated with the reviewer.

In an embodiment of the present disclosure, the score generation module 222 is configured to generate a probability score for each of the obtained set of documents in a context of a set of previous decisions of reviewers who work on a project by using an active learning approach. Further, the generated probability score is visualized in a form of a diagram presenting a set of scores of the set of documents in a list with the score for a given document highlighted, and a review progress. For example, the AI-based computing system 104 runs a complex semantic analysis of the text of each of the set of documents and determines what it is about, searches for the terms and concepts defined in the study protocol, tries to provide the reviewer with detailed explanation that what and where are the fragments of the text that are the most important in the context of the study. These outcomes are shown by using the probability score (for the whole document) as well as we highlight fragments of the text with different colors to indicate meaningful locations that the reviewer would likely want to focus on.

In operation, the AI-based computing system 104 in focus mode displays a single document in a context of the set of documents to allow the reviewer to focus on verification of important information, having all that information on the screen, such as metadata, linked data, and the like. The text of the document is displayed on the user interface screen at the center of the screen using fonts clearly contrasting from the background. Further, the text is overlaid with colorful annotations or indicators provided by the AI-based computing system 104 by using the NLP model and by the AI driving the context-driven indicators. Further, the contextual information for the document, such as title, URL, authors, year published and the like, are displayed on one side of the document using a non-intrusive font with non-distracting colors of low contrast with the background. The reviewer is presented with a list of contextual actions in a form of on-screen buttons, icons and other actions components, selected by the system depending on the type of the document, phase of the review and - optionally - the options made available to the reviewer by the project manager. Further, the AI-based computing system 104 changes the context of what should be displayed next, based on user-defined criteria, such as "show me more documents with this keyword", "show me more about this topic (fuzzy/NLP)", "show me more likely to reject" and the like, user's recent decisions, that trigger re-analysis of the likelihood that the next documents in the queue are to be included (positive-first method) or rejected (negative-first method). The AI-based computing system 104 allows the user to define the level of details shown, from "indicators disabled", to "all details", where the individual level of details is ordered by the relevance of the displayed details to the chance that the information may influence the reviewer's decision on inclusion or exclusion of the document (screening mode) or a decision to include a given fragment in the data extraction. The AI-based computing system 104 also provides the user with a filter to switch on and off different categories of indicators in the overlay. In an exemplary embodiment of the present disclosure, the categories include both types of indicators (highlights, icons, drawings etc.), types of highlighted elements determined by the NLP model, individual levels of details, and the like.

Further, the score generation module 222 is configured to generate a probability score for each of the obtained set of documents in a context of a co-citation graph of the whole set of the documents and previous decisions of reviewers who work on the project. In an embodiment of the present disclosure, the generated probability score is visualized in a form of a diagram presenting a set of scores of the obtained set of documents in a list with the score for a given document highlighted, and a review progress. Furthermore, a set of already screened documents in the obtained set of documents that are similar in the terms of citation relation including being cited by the same references or citing the same references are visualized along with their inclusion status.

In an embodiment of the present disclosure, a link to a full-text version of an article is automatically generated based on a lookup in an open access and related literature databases, and visualized in the user interface.

The recommendation generation module 224 is configured to generate one or more recommendations about including or excluding each of the obtained set of documents based on the study protocol based on the received study protocol by using the document management based-AI model. The one or more recommendations are outputted on the user interface screen of the one or more electronic devices 102 via one or more methods. In an exemplary embodiment of the present disclosure, the one or more methods include recommendation balloons, icons, scrollbar markers, and the like. For example, the AI-based computing system 104 runs a complex semantic analysis of the text of each of the set of documents and determines what it is about, searches for the terms and concepts defined in the study protocol, tries to assess how likely the document should be included in the body of evidence or excluded from it.

In an embodiment of the present disclosure, a list of contextual actions is outputted on the user interface screen of the one or more electronic devices 102 associated with the reviewer in one or more forms selected by the AI-based computing system 104 based on the type of the document, phase of the review and one or more options made available to the reviewer by a project manager. In an exemplary embodiment of the present disclosure, the one or more forms include on-screen buttons, icons, other actions components, and the like.

The document organizer module 214 is configured to perform a dynamic list reordering. In an embodiment of the present disclosure, the dynamic list reordering corresponds to changing context of what is required to be displayed next based on user defined criteria and user's recent decisions that trigger re-analysis of a likelihood that one or more next documents in a queue are to be included or rejected. Further, a set of available dynamic reordering choices include no order, model-defined order, user defined order, and the like. When the reviewer selects the model-defined order, a list of documents is sorted based on the study protocol and a set of previous user decisions based on the document management based-AI model. Further, the reviewer can select if the AI-based system is required to re-order the list of the documents on the fly or if the user triggers the re-sort.

Further, when the reviewer selects the user-defined order, the user is required to provide one or more ordering criteria. The one or more number of ordering criteria include score provided by a model for advanced re-ordering combining model-defined score and user-provided criteria, one or more sortable metadata fields of the document (e.g., Year), and one or more keyword phrases that the document contains, for which the user additionally define the comparison criteria including literal, fuzzy or using the Natural Language Processing (NLP). In an embodiment of the present disclosure, the comparison criteria is defined to allow for word variations, alternate expressions, and the like. For each of the one or more ordering criteria, the user defines if the one or more ordering criteria increases a rank or decreases the rank. The user also provides a weight of how a given criterion influences the rank. The rank of each set of documents is calculated to sort the set of documents in accordance with the calculated ranks.

In an embodiment of the present disclosure, the user may select a 'focus mode'. The focus mode allows the reviewer to focus on assessment of the information in the given individual document, but operating in the context of the list, having all the additional contextual information available on the screen and being able to rely on the AI model to select the order of the documents in the most efficient way given the content and the context of the document as well as the strategy the reviewer applies in a given model to structure the subset of the documents to process. The focus mode also allows the reviewer to focus on the most important elements of the document and the user interface will show primarily the elements that have the highest chance to influence a decision to include or exclude the document in or from the body of evidence (in screening phase of the review) or a decision to select a given fragment for data extraction (in data extraction phase). Further, the focus mode allows the reviewer to modify the level of visual assistance according to her/his needs, ranging from "no distractions, original text only" mode to a "full assistance" overlay, which provides all the decision help that the system and its artificial intelligence are able to offer in a given case.

The abstract management module 226 detects one or more headings of expected sections of an abstract of the document by analyzing text of the abstract. The abstract management module 226 splits the text of the abstract into one or more sections defined by the detected one or more headings. Furthermore, the abstract management module 226 formats the one or more sections of the abstract on a page in a predefined order of sections by using one or more predefined styles of the one or more headings and the section text. In an embodiment of the present disclosure, the one or more predefined styles include text size, fonts, colors, margins, and lineature. In an embodiment of the present disclosure, additional headings or fragments not belonging to any of the one or more headings that may be found in the text are hidden. The abstract management module 226 detects one or more section headings that may use works of equivalent, but different meaning or may be mistyped by using abstract management-based Machine Learning (ML) model upon detecting that the abstract exists, but one or more sections do not have expected headers. When the one or more section headings are not found, an NLP-based semantic model is applied on the text to identify one or more predefined sections. When no text is found for a given section, it remains empty. The abstract management module 226 performs the steps of splitting and formatting the one or more sections. The abstract management module 226 generates the text of the abstract by using one of: text generation models and one or more external services upon determining that the text has no abstract. In an exemplary embodiment of the present disclosure, the one or more external services include GPT-3, GPT-Neo, GPT-x, and the like. The abstract management module 226 performs the steps of detecting the section headings.

In an embodiment of the present disclosure, information on the retraction status of the record is automatically fetched from the available databases including the Retraction Watch database, and visualized in the user interface.

In an embodiment of the present disclosure, the reviewer may use a "canonical form of the abstract" approach. The said approach provides a uniform way to present information written in the abstract of the document to the reviewer, utilizing NLP-driven semantic analysis of the text and with help of the machine learning model by maintaining a similar layout of the abstract's content independent on the source of the document, as well as visually indicating the fragments of the abstract most important for the reviewer in the context of the current literature review.

In operation, the AI-based computing system 104 in canonical form of abstract mode performs semantic analysis-based re-formatting of the text of the abstract to provide the uniform layout independently on the formatting applied by the publication, scanning or database errors, and the like. Further, Semantic analysis-based indicators (e.g. highlights) of the fragments of the document that are the most relevant to the reviewer are generated depending on the context of the review, information that may exclude the document, information that may likely include the document, information relevant to the fragments that the user looks for at the given time (keywords, topics etc.), and the like. The user may switch the canonical form of abstract mode on and off. In an embodiment of the present disclosure, when the abstract is not available or is incomplete, the system can generate a canonical form of abstract from the full text of the document. In canonical form of abstract mode, the abstract is split into sections, one or more tiles are generated for the sections and the sections are arranged in the appropriate order. For example, a mixture of deterministic decision trees with a simple NLP is used to tokenize the document in order to find the relevant fragments if they cannot be found directly. Further, for generation of the abstract from the full-text models utilizing OpenAI's GPT-3 text generation model or one of open-source alternatives (GPT-Neo or GPT-J), and the like are used.

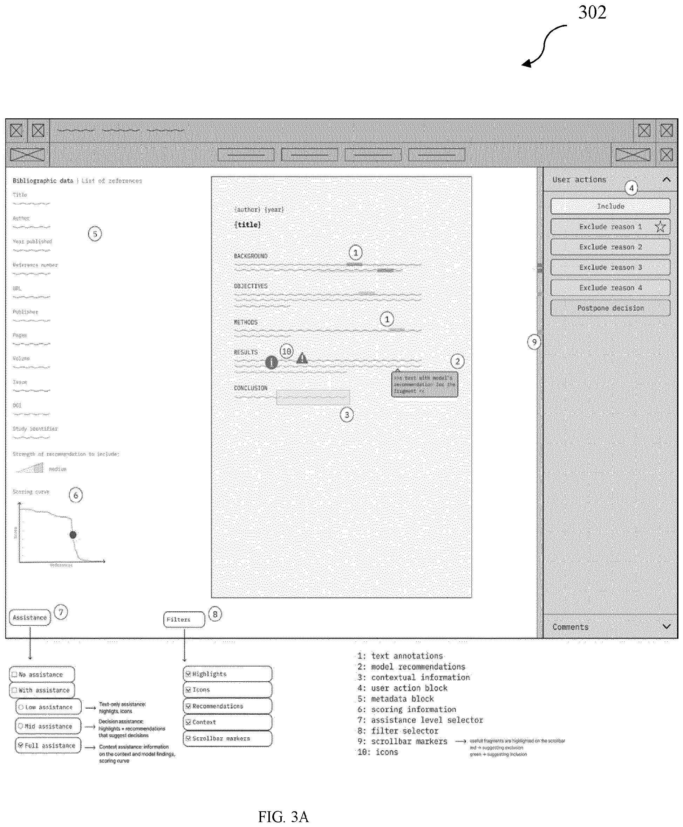

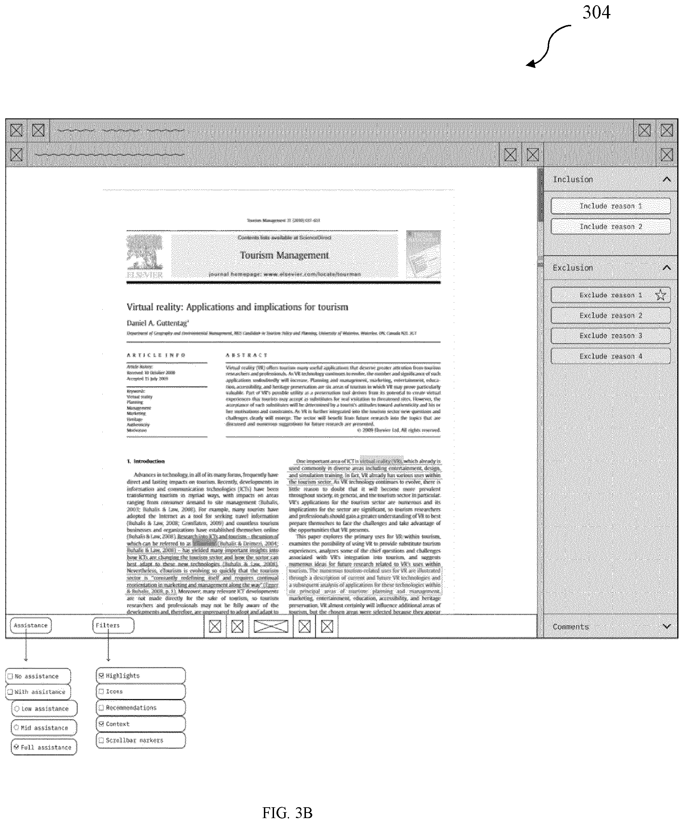

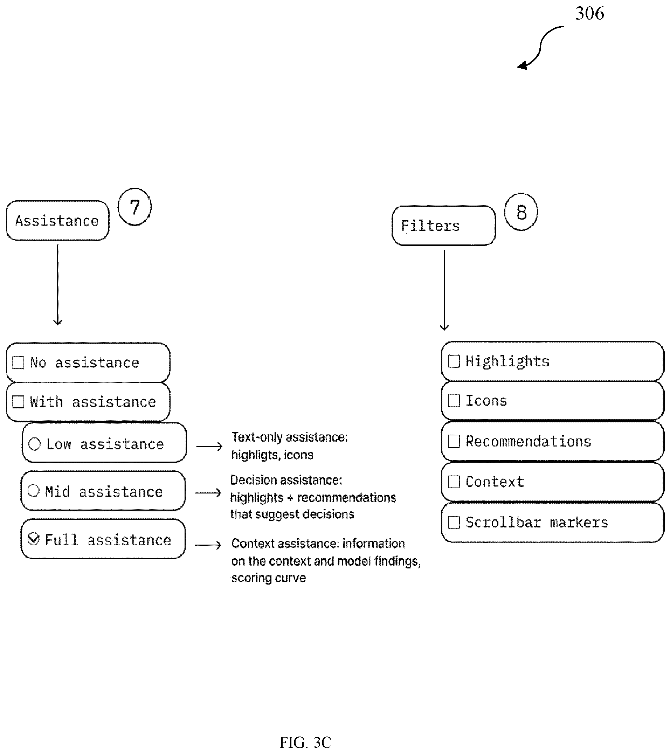

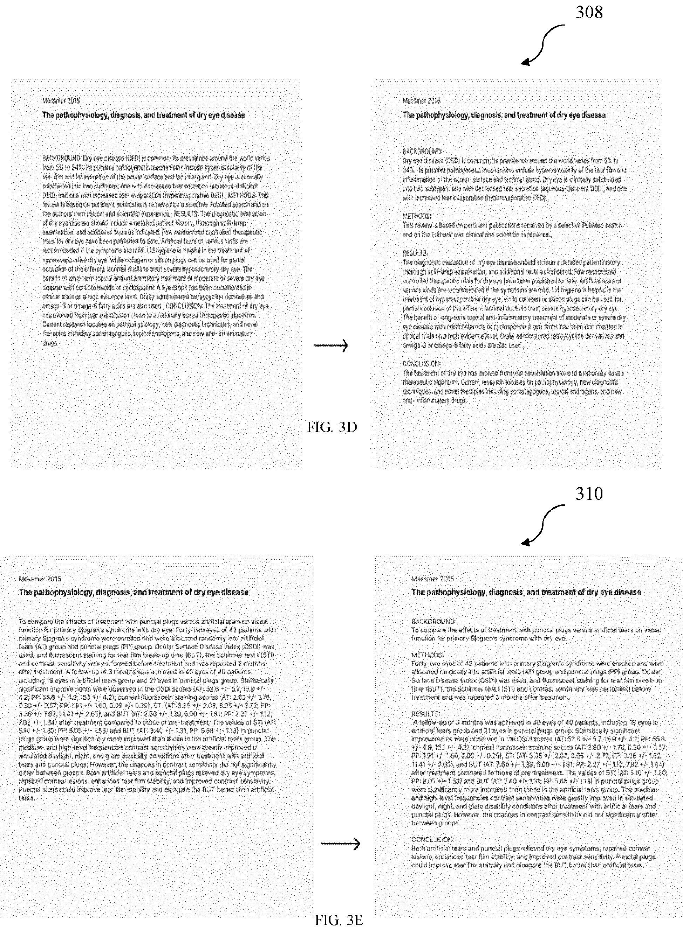

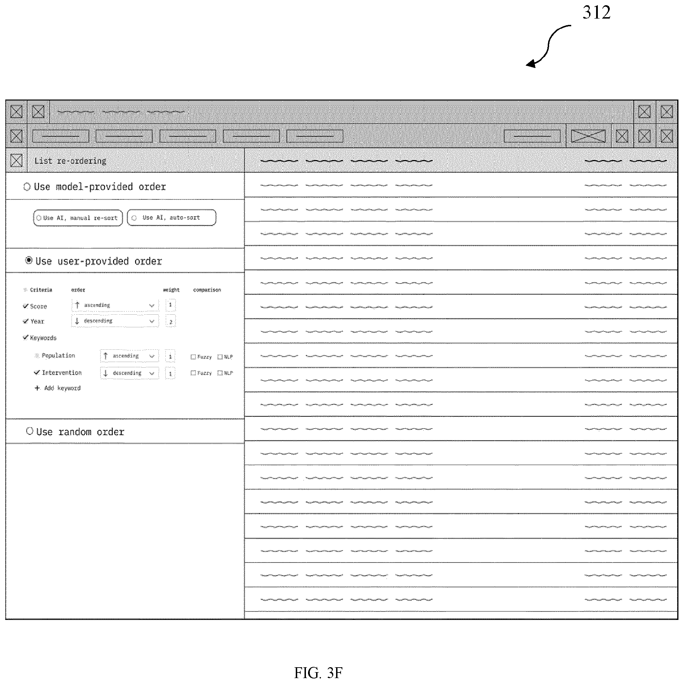

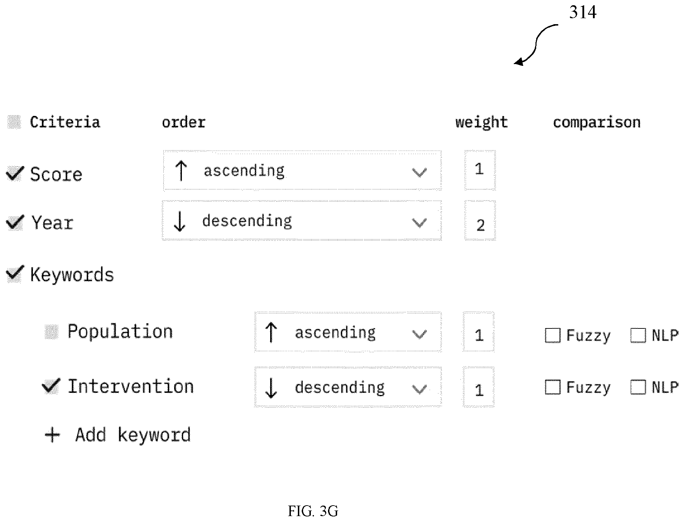

**FIGs. 3A** - **3G** are graphical user interface screens of the AI-based computing system 104 for improving speed and quality of work on literature reviews, in accordance with an embodiment of the present disclosure. In an embodiment of the present disclosure, graphical user interface screen 302 depicts score in the focus mode as an element of the non-intrusive metadata information and it is visualized in a form of a diagram presenting the scores of all of the documents in the list with the score for the given document highlighted, and the review progress. It is represented by (6) in **FIG. 3A**. In an embodiment of the present disclosure, the highlights are generated based on relevance of the phrases to the study protocol generated by the NLP, and keywords designed by the user. The model provides recommendations to the user about including or excluding the given document based on the study protocol. This can be done via a number of ways, such as recommendation "balloons", icons and scrollbar markers, as shown in the graphical user interface screen 304. In an embodiment of the present disclosure, each of them can be individually switched off. Further, the focus mode with the full-text view (FT screening or data extraction) with some of the filters switched off is depicted in graphical user interface screen 304, as shown in **FIG. 3B**. Further, the graphical user interface screen 304 shows the case of "full assistance", with all the layers switched on. For example, the user can switch between various levels of assistance. The model also indicates areas where additional contextual information may be found, which - according to the model - may influence the reviewer's decision to include or exclude the document. **FIG. 3C** is a graphical user interface screen 306 allowing the reviewer to choose the level of visual assistance, which turns on and off layers presented to the user. The order of the level of assistance (in the picture "indicators disabled" = "no assistance" and "all details" = "full assistance") is determined by how much the given type of information shown in the overlay can influence the user to make a decision (for or against inclusion). The most important ("low assistance") are the highlights, as they relate closely to the study protocol. Then ("mid assistance") are the model recommendations and so-called "decision assistance" highlights and icons. Finally, in the "full assistance", the model shows all the information available (including the context information, notes etc.), risking information clutter. Further, **FIG. 3D** is a graphical user interface screen 308 depicting creation of the canonical form of abstract from badly formatted text. **FIG. 3E** is a graphical user interface screen 310 depicting creation of the canonical form of abstract from a free-form text (abstract that has no structure, abstract of incorrect structure, or a full text that has no abstract). **FIG. 3F** is a graphical user interface screen 312 depicting one or more available dynamic ordering choices, such as no order (use random order), model-defined order, and user-provided. **FIG. 3G** is a graphical user interface screen 314 depicting a set of filters for dynamic reordering of the set of documents.

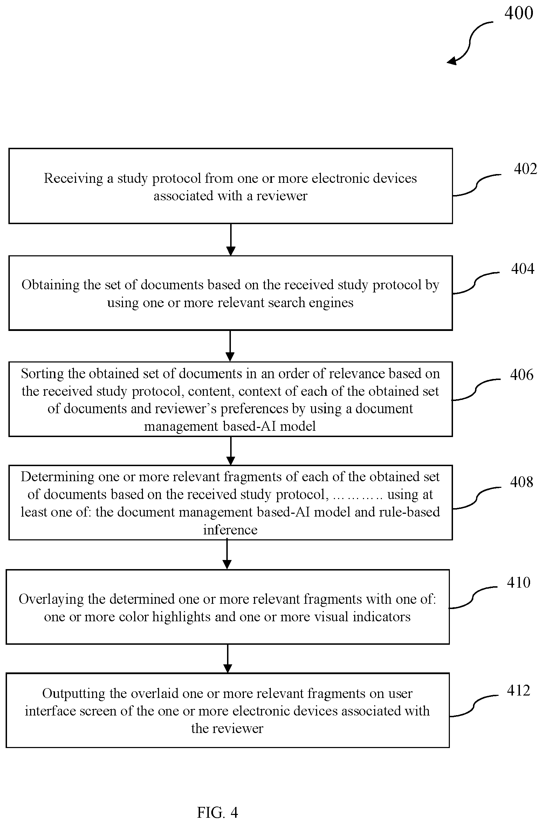

**FIG 4** is a process flow diagram illustrating an exemplary AI-based method for improving speed and quality of work on literature reviews, in accordance with an embodiment of the present disclosure. At step 402, a study protocol is received from one or more electronic devices 102 associated with a reviewer. In an embodiment of the present disclosure, the study protocol defines the one or more terms and the one or more concepts to search for the set of documents. In an exemplary embodiment of the present disclosure, the one or more electronic devices 102 may include a laptop computer, desktop computer, tablet computer, smartphone, wearable device, smart watch, and the like.

At step 404, the set of documents are obtained based on the received study protocol by using the one or more relevant search engines 108.

At step 406, the obtained set of documents are sorted in an order of relevance based on the received study protocol, content, context of each of the obtained set of documents and reviewer's preferences by using a document management based-AI model.

At step 408, one or more relevant fragments of each of the obtained set of documents are determined based on the received study protocol, the content, the context of each of the obtained set of documents, relevance of phrases to the received study protocol, and a set of keywords defined by the reviewer by using the document management based-AI model, rule-based inference, or a combination thereof. In an embodiment of the present disclosure, the one or more relevant fragments have the highest likelihood to influence a decision of the reviewer to include or exclude a document in or from a body of evidence. The one or more relevant fragments have the highest likelihood to influence a decision of the reviewer to select a fragment for data extraction.

At step 410, the determined one or more relevant fragments are overlaid with one or more color highlights or one or more visual indicators. In an exemplary embodiment of the present disclosure, the one or more visual indicators include icons, underscores, call-outs, side notes, arrows, and lines.

At step 412, the overlaid one or more relevant fragments are outputted on the user interface screen of the one or more electronic devices 102 associated with the reviewer.

Further, the AI-based method 400 includes generating a probability score for each of the obtained set of documents in a context of a set of previous decisions of reviewers who work on a project by using an active learning approach. Further, the generated probability score is visualized in a form of a diagram presenting a set of scores of the set of documents in a list with the score for a given document highlighted, and a review progress. For example, the AI-based computing system 104 runs a complex semantic analysis of the text of each of the set of documents and determines what it is about, searches for the terms and concepts defined in the study protocol, tries to provide the reviewer with detailed explanation that what and where are the fragments of the text that are the most important in the context of the study. These outcomes are shown by using the probability score (for the whole document) as well as we highlight fragments of the text with different colors to indicate meaningful locations that the reviewer would likely want to focus on.

Further, the AI-based method 400 includes generating a probability score for each of the obtained set of documents in a context of a co-citation graph of the whole set of the documents and previous decisions of reviewers who work on the project. In an embodiment of the present disclosure, the generated probability score is visualized in a form of a diagram presenting a set of scores of the obtained set of documents in a list with the score for a given document highlighted, and a review progress. Furthermore, a set of already screened documents in the obtained set of documents that are similar in the terms of citation relation including being cited by the same references or citing the same references are visualized along with their inclusion status.

In an embodiment of the present disclosure, a link to a full-text version of an article is automatically generated based on a lookup in an open access and related literature databases, and visualized in the user interface.

The AI-based method 400 includes generating one or more recommendations about including or excluding each of the obtained set of documents based on the study protocol based on the received study protocol by using the document management based-AI model. The one or more recommendations are outputted on the user interface screen of the one or more electronic devices 102 via one or more methods. In an exemplary embodiment of the present disclosure, the one or more methods include recommendation balloons, icons, scrollbar markers, and the like. For example, the AI-based computing system 104 runs a complex semantic analysis of the text of each of the set of documents and determines what it is about, searches for the terms and concepts defined in the study protocol, tries to assess how likely the document should be included in the body of evidence or excluded from it.

In an embodiment of the present disclosure, a list of contextual actions is outputted on the user interface screen of the one or more electronic devices 102 associated with the reviewer in one or more forms selected by the AI-based computing system 104 based on the type of the document, phase of the review and one or more options made available to the reviewer by a project manager. In an exemplary embodiment of the present disclosure, the one or more forms include on-screen buttons, icons, other actions components, and the like.

The AI-based method 400 includes performing a dynamic list reordering. In an embodiment of the present disclosure, the dynamic list reordering corresponds to changing context of what is required to be displayed next based on user defined criteria and user's recent decisions that trigger re-analysis of a likelihood that one or more next documents in a queue are to be included or rejected. Further, a set of available dynamic reordering choices include no order, model-defined order, user defined order, and the like. When the reviewer selects the model-defined order, a list of documents is sorted based on the study protocol and a set of previous user decisions based on the document management based-AI model. Further, the reviewer can select if the AI-based system is required to re-order the list of the documents on the fly or if the user triggers the re-sort.

Further, when the reviewer selects the user-defined order, the user is required to provide one or more ordering criteria. The one or more number of ordering criteria include score provided by a model for advanced re-ordering combining model-defined score and user-provided criteria, one or more sortable metadata fields of the document (e.g., Year), and one or more keyword phrases that the document contains, for which the user additionally define the comparison criteria including literal, fuzzy or using the Natural Language Processing (NLP). In an embodiment of the present disclosure, the comparison criteria is defined to allow for word variations, alternate expressions, and the like. For each of the one or more ordering criteria, the user defines if the one or more ordering criteria increases a rank or decreases the rank. The user also provides a weight of how a given criterion influences the rank. The rank of each set of documents is calculated to sort the set of documents in accordance with the calculated ranks.

In an embodiment of the present disclosure, the user may select a 'focus mode'. The focus mode allows the reviewer to focus on assessment of the information in the given individual document, but operating in the context of the list, having all the additional contextual information available on the screen and being able to rely on the AI model to select the order of the documents in the most efficient way given the content and the context of the document as well as the strategy the reviewer applies in a given model to structure the subset of the documents to process. The focus mode also allows the reviewer to focus on the most important elements of the document and the user interface will show primarily the elements that have the highest chance to influence a decision to include or exclude the document in or from the body of evidence (in screening phase of the review) or a decision to select a given fragment for data extraction (in data extraction phase). Further, the focus mode allows the reviewer to modify the level of visual assistance according to her/his needs, ranging from "no distractions, original text only" mode to a "full assistance" overlay, which provides all the decision help that the system and its artificial intelligence are able to offer in a given case.

The AI-based method 400 includes detecting one or more headings of expected sections of an abstract of the document by analyzing text of the abstract. The AI-based method 400 includes splitting the text of the abstract into one or more sections defined by the detected one or more headings. Furthermore, the AI-based method 400 includes formatting the one or more sections of the abstract on a page in a predefined order of sections by using one or more predefined styles of the one or more headings and the section text. In an embodiment of the present disclosure, the one or more predefined styles include text size, fonts, colors, margins, and lineature. In an embodiment of the present disclosure, additional headings or fragments not belonging to any of the one or more headings that may be found in the text are hidden. The AI-based method 400 includes detecting one or more section headings that may use works of equivalent, but different meaning or may be mistyped by using abstract management-based Machine Learning (ML) model upon detecting that the abstract exists, but one or more sections do not have expected headers. When the one or more section headings are not found, an NLP-based semantic model is applied on the text to identify one or more predefined sections. When no text is found for a given section, it remains empty. The AI-based method 400 includes performing the steps of splitting and formatting the one or more sections. The AI-based method 400 includes generating the text of the abstract by using one of: text generation models and one or more external services upon determining that the text has no abstract. In an exemplary embodiment of the present disclosure, the one or more external services include GPT-3, GPT-Neo, GPT-x, and the like. The AI-based method 400 includes performing the steps of detecting the section headings.

In an embodiment of the present disclosure, information on the retraction status of the record is automatically fetched from the available databases including retraction watch, and visualized in the user interface.

In an embodiment of the present disclosure, the reviewer may use a "canonical form of the abstract" approach. The said approach provides a uniform way to present information written in the abstract of the document to the reviewer, utilizing NLP-driven semantic analysis of the text and with help of the machine learning model by maintaining a similar layout of the abstract's content independent on the source of the document, as well as visually indicating the fragments of the abstract most important for the reviewer in the context of the current literature review.

The AI-based method 400 may be implemented in any suitable hardware, software, firmware, or combination thereof.

Thus, various embodiments of the present AI-based computing system 104 provide a solution to improve speed and quality of work on literature reviews. The AI-based computing system 104 addresses a problem of working with very long (often well above 1.000, often over 10.000 elements) lists of documents that require human review and a decision whether a given document includes information relevant to investigated subject matter and therefore should remain in the list or it should be removed from the list. This problem is typical to various types of literature reviews, including the most structured of them - the systematic reviews.

In an embodiment of the present disclosure, working on the literature review in screening and in data extraction phases means constant decision making by the reviewer. In case of screening, the reviewer must decide if the given document should be included in the body of evidence (which means - it is relevant to the study and fulfills the requirements of the study protocol) or should be excluded. The faster that decision can be made, the better. Unfortunately, often the reviewer does not know and needs to take her/his time or postpone the document for later and start working on the next one. In case of data extraction, the decisions are made on the level of individual words (or other fields in the document - texts, numbers, parts of the diagram, parts of drawings etc.). The reviewer therefore decides that a given fragment contains data relevant in the study and extracts that data. The AI-based computing system 104 addresses these problems of the traditional method and also addresses efficiency of interaction of the human expert participating in the review with the machine, by applying certain methods of data-driven presentation of information to the reviewer that help her/him to understand the information provided by the model faster, and take quicker, more precise decisions about the given document. In an embodiment of the present disclosure, the AI-based computing system 104 depends strongly on the proprietary NLP model, which- for each of the documents - runs a complex semantic analysis of the text and determines what it is about, searches for the terms and concepts defined in the study protocol, tries to assess how likely the document should be included in the body of evidence or excluded from it and provides the reviewer with detailed explanation what are and where are the fragments of the text that are the most important in the context of the study. These outcomes are shown by the probability score (for the whole document) as well as we highlight fragments of the text with different colors to indicate meaningful locations that the user would likely want to focus on.

Furthermore, documents are often very disorderly. Even the published articles, such as clinical study results often do not follow standards of how a well-structured document should be authored. However, they almost always provide some form of an abstract, which is a primary source of information for the TA screening. The "canonical form of an abstract" innovation provides the reviewers with a structure that they can immediately recognize, process and they feel at home with, without searching where the given information is placed. In the worst case (abstract totally missing, which happens in non-article literature), the AI-based computing system 104 may generate the abstract from the full text of the document using the NLP model.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer-readable medium can be any apparatus that can comprise, store, communicate, propagate, or transport the program for use by or in connection with the instruction execution system, apparatus, or device.

The medium can be an electronic, magnetic, optical, electromagnetic, infrared, or semiconductor system (or apparatus or device) or a propagation medium. Examples of a computer-readable medium include a semiconductor or solid-state memory, magnetic tape, a removable computer diskette, a random-access memory (RAM), a read-only memory (ROM), a rigid magnetic disk and an optical disk. Current examples of optical disks include compact disk-read only memory (CD-ROM), compact disk-read/write (CD-R/W) and DVD.

Input/output (I/O) devices (including but not limited to keyboards, displays, pointing devices, etc.) can be coupled to the system either directly or through intervening I/O controllers. Network adapters may also be coupled to the system to enable the data processing system to become coupled to other data processing systems or remote printers or storage devices through intervening private or public networks. Modems, cable modem and Ethernet cards are just a few of the currently available types of network adapters.

A representative hardware environment for practicing the embodiments may include a hardware configuration of an information handling/computer system in accordance with the embodiments herein. The system herein comprises at least one processor or central processing unit (CPU). The CPUs are interconnected via system bus 208 to various devices such as a random-access memory (RAM), read-only memory (ROM), and an input/output (I/O) adapter. The I/O adapter can connect to peripheral devices, such as disk units and tape drives, or other program storage devices that are readable by the system. The system can read the inventive instructions on the program storage devices and follow these instructions to execute the methodology of the embodiments herein.

The system further includes a user interface adapter that connects a keyboard, mouse, speaker, microphone, and/or other user interface devices such as a touch screen device (not shown) to the bus to gather user input. Additionally, a communication adapter connects the bus to a data processing network, and a display adapter connects the bus to a display device which may be embodied as an output device such as a monitor, printer, or transmitter, for example.

A description of an embodiment with several components in communication with each other does not imply that all such components are required. On the contrary, a variety of optional components are described to illustrate the wide variety of possible embodiments of the invention. When a single device or article is described herein, it will be apparent that more than one device/article (whether or not they cooperate) may be used in place of a single device/article. Similarly, where more than one device or article is described herein (whether or not they cooperate), it will be apparent that a single device/article may be used in place of the more than one device or article, or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments. Also, the words "comprising," "having," "containing," and "including," and other similar forms are intended to be equivalent in meaning and be open-ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

## Claims

1. An Artificial Intelligence (AI)-based computing system for improving speed and quality of work on literature reviews, the AI-based computing system comprising:
one or more hardware processors; and
a memory coupled to the one or more hardware processors, wherein the memory comprises a plurality of modules in the form of programmable instructions executable by the one or more hardware processors, and wherein the plurality of modules comprises:
a data receiver module configured to receive a study protocol from one or more electronic devices associated with a reviewer, wherein the study protocol defines one or more terms and one or more concepts to search for a set of documents;
a result obtaining module configured to obtain the set of documents based on the received study protocol by using one or more relevant search engines;
a document organizer module configured to sort the obtained set of documents in an order of relevance based on the received study protocol, content, context of each of the obtained set of documents and reviewer's preferences by using a document management based-AI model; wherein preferably the document organizer module is configured to perform a dynamic list reordering, wherein the dynamic list reordering corresponds to changing context of what is required to be displayed next based on user defined criteria and user's recent decisions that trigger re-analysis of a likelihood that one or more next documents in a queue are to be one of: included and rejected, wherein a set of available dynamic reordering choices comprise no order, model-defined order, and user defined order, wherein when the reviewer selects the model-defined order, a list of documents is sorted based on the study protocol and a set of previous user decisions based on the document management based-AI model, and wherein the reviewer can select if the AI-based system is required to one of: re-order the list of the documents on the fly and if the user triggers the re-sort;
an element determination module configured to determine one or more relevant fragments of each of the obtained set of documents based on the received study protocol, the content, the context of each of the obtained set of documents, relevance of phrases to the received study protocol, and a set of keywords defined by the reviewer by using at least one of: the document management based-AI model and rule-based inference;
an element indication module configured to overlay the determined one or more relevant fragments with one of: one or more color highlights and one or more visual indicators, wherein the one or more visual indicators comprise icons, underscores, call-outs, side notes, arrows, and lines; and
a data output module configured to output the overlaid one or more relevant fragments on the user interface screen of the one or more electronic devices associated with the reviewer.

2. The AI-based computing system of claim 1, further comprising a score generation module configured to generate a probability score for each of the obtained set of documents in a context of a set of previous decisions of reviewers who work on project by using an active learning approach, wherein the generated probability score is visualized in a form of a diagram presenting a set of scores of the set of documents in a list with the score for a given document highlighted, and a review progress, or a score generation module configured to generate a probability score for each of the obtained set of documents in a context of a co-citation graph of the whole set of the documents and previous decisions of reviewers who work on the project, wherein the generated probability score is visualized in a form of a diagram presenting a set of scores of the obtained set of documents in a list with the score for a given document highlighted, and a review progress, and wherein a set of already screened documents in the obtained set of documents that are similar in the terms of citation relation comprising one of: being cited by the same references and citing the same references are visualized along with their inclusion status

3. The AI-based computing system of claim 1 or 2, further comprising a recommendation generation module configured to generate one or more recommendations about one of: including and excluding each of the obtained set of documents based on the study protocol based on the received study protocol by using the document management based-AI model, wherein the one or more recommendations are outputted on user interface screen of the one or more electronic devices via one or more methods, and wherein the one or more methods comprise recommendation balloons, icons and scrollbar markers.

4. The AI-based computing system of any of claims 1-3, wherein a list of contextual actions is outputted on the user interface screen of the one or more electronic devices associated with the reviewer in one or more forms selected by the AI-based computing system based on the type of the document, phase of the review and one or more options made available to the reviewer by a project manager, wherein the one or more forms comprise: on-screen buttons, icons and other actions components, and wherein preferably when the reviewer selects the user-defined order, the user is required to provide one or more ordering criteria, wherein the one or more number of ordering criteria comprise score provided by a model for advanced re-ordering combining model-defined score and user-provided criteria, one or more sortable metadata fields of the document, and one or more keyword phrases that the document contains, for which the user additionally define the comparison criteria comprising one of: literal, fuzzy and using the Natural Language Processing (NLP), wherein for each of the one or more ordering criteria, the user defines if the one or more ordering criteria one of: increases a rank and decreases the rank, wherein the user also provides a weight of how a given criterion influences the rank, and wherein the rank of each of the set of documents is calculated to sort the set of documents in accordance with the calculated ranks.

5. The AI-based computing system of any of claims 1-4, further comprises an abstract management module configured to:
detect one or more headings of expected sections of an abstract of the document by analyzing text of the abstract;
split the text of the abstract into one or more sections defined by the detected one or more headings;
format the one or more sections of the abstract on a page in a predefined order of sections by using one or more predefined styles of the one or more headings and the section text, wherein the one or more predefined styles comprise text size, fonts, colors, margins, and lineature, and wherein one of: additional headings and fragments not belonging to any of the one or more headings, that are found in the text are hidden;
detect one or more section headings that use works of equivalent, but one of: different meaning and mistyped by using abstract management-based Machine Learning (ML) model upon detecting that the abstract exists, but one or more sections do not have expected headers, wherein when the one or more section headings are not found, an NLP-based semantic model is applied on the text to identify one or more predefined sections, and wherein when no text is found for a given section, it remains empty; and
generate the text of the abstract by using one of: text generation models and one or more external services upon determining that the text has no abstract.

6. The AI-based computing system of any of claims 1-5, wherein the one or more relevant fragments have the highest likelihood to influence a decision of the reviewer to one of: include and exclude a document in or from a body of evidence, and wherein the one or more relevant fragments have the highest likelihood to influence a decision of the reviewer to select a fragment for data extraction.

7. The AI-based computing system of any of claims 1-6, wherein a link to a full-text version of an article is automatically generated based on a lookup in an open access and related literature databases, and visualized in the user interface, and preferably wherein information on the retraction status of the record is automatically fetched from the available databases comprising retraction watch, and visualized in the user interface.

8. An Artificial Intelligence (AI)-based method for system for improving speed and quality of work on literature reviews, the AI-based method comprising:
receiving, by one or more hardware processors, a study protocol from one or more electronic devices associated with a reviewer, wherein the study protocol defines one or more terms and one or more concepts to search for a set of documents;
obtaining, by the one or more hardware processors, the set of documents based on the received study protocol by using one or more relevant search engines;
sorting, by the one or more hardware processors, the obtained set of documents in an order of relevance based on the received study protocol, content, context of each of the obtained set of documents and reviewer's preferences by using a document management based-AI model;
determining, by the one or more hardware processors, one or more relevant fragments of each of the obtained set of documents based on the received study protocol, the content, the context of each of the obtained set of documents, relevance of phrases to the received study protocol, and a set of keywords defined by the reviewer by using at least one of: the document management based-AI model and rule-based inference;
overlaying, by one or more hardware processors, the determined one or more relevant fragments with one of: one or more color highlights and one or more visual indicators, wherein the one or more visual indicators comprise icons, underscores, call-outs, side notes, arrows, and lines; and
outputting, by the one or more hardware processors, the overlaid one or more relevant fragments on the user interface screen of the one or more electronic devices associated with the reviewer.

9. The AI-based method of claim 8, further comprising generating a probability score for each of the obtained set of documents in a context of a set of previous decisions of reviewers who work on project by using an active learning approach, wherein the generated probability score is visualized in a form of a diagram presenting a set of scores of the set of documents in a list with the score for a given document highlighted, and a review progress.

10. The AI-based method of claim 8 or 9, further comprising generating one or more recommendations about one of: including and excluding each of the obtained set of documents based on the study protocol based on the received study protocol by using the document management based-AI model, wherein the one or more recommendations are outputted on user interface screen of the one or more electronic devices via one or more methods, and wherein the one or more methods comprise recommendation balloons, icons and scrollbar markers.

11. The AI-based method of any of claims 8-10, wherein a list of contextual actions is outputted on the user interface screen of the one or more electronic devices associated with the reviewer in one or more forms selected by the AI-based computing system 104 based on the type of the document, phase of the review and one or more options made available to the reviewer by a project manager, wherein the one or more forms comprise: on-screen buttons, icons and other actions components, and wherein preferably when the reviewer selects the user-defined order, the user is required to provide one or more ordering criteria, wherein the one or more number of ordering criteria comprise score provided by a model for advanced re-ordering combining model-defined score and user-provided criteria, one or more sortable metadata fields of the document, and one or more keyword phrases that the document contains, for which the user additionally define the comparison criteria comprising one of: literal, fuzzy and using the Natural Language Processing (NLP), wherein for each of the one or more ordering criteria, the user defines if the one or more ordering criteria one of: increases a rank and decreases the rank, wherein the user also provides a weight of how a given criterion influences the rank, and wherein the rank of each of the set of documents is calculated to sort the set of documents in accordance with the calculated ranks.

12. The AI-based method of any of claims 8-11, further comprising performing a dynamic list reordering, wherein the dynamic list reordering corresponds to changing context of what is required to be displayed next based on user defined criteria and user's recent decisions that trigger re-analysis of a likelihood that one or more next documents in a queue are to be one of: included and rejected, wherein a set of available dynamic reordering choices comprise no order, model-defined order, and user defined order, wherein when the reviewer selects the model-defined order, a list of documents is sorted based on the study protocol and a set of previous user decisions based on the document management based-AI model, and wherein the reviewer can select if the AI-based system is required to one of: re-order the list of the documents on the fly and if the user triggers the re-sort.

13. The AI-based method of any of claims 8-12, further comprising:
detecting one or more headings of expected sections of an abstract of the document by analyzing text of the abstract;
splitting the text of the abstract into one or more sections defined by the detected one or more headings;
formatting the one or more sections of the abstract on a page in a predefined order of sections by using one or more predefined styles of the one or more headings and the section text, wherein the one or more predefined styles comprise text size, fonts, colors, margins, and lineature, and wherein one of: additional headings and fragments not belonging to any of the one or more headings, that are found in the text are hidden;
detecting one or more section headings that use works of equivalent, but one of: different meaning and mistyped by using abstract management-based Machine Learning (ML) model upon detecting that the abstract exists, but one or more sections do not have expected headers, wherein when the one or more section headings are not found, an NLP-based semantic model is applied on the text to identify one or more predefined sections, and wherein when no text is found for a given section, it remains empty; and
generating the text of the abstract by using one of: text generation models and one or more external services upon determining that the text has no abstract.

14. The AI-based method of any of claims 8-13, further comprising generating a probability score for each of the obtained set of documents in a context of a co-citation graph of the whole set of the documents and previous decisions of reviewers who work on the project, wherein the generated probability score is visualized in a form of a diagram presenting a set of scores of the obtained set of documents in a list with the score for a given document highlighted, and a review progress, and wherein a set of already screened documents in the obtained set of documents that are similar in the terms of citation relation comprising one of: being cited by the same references and citing the same references are visualized along with their inclusion status.

15. The AI-based method of any of claims 8-14, wherein a link to a full-text version of an article is automatically generated based on a lookup in an open access and related literature databases, and visualized in the user interface, and preferably wherein information on the retraction status of the record is automatically fetched from the available databases comprising retraction watch, and visualized in the user interface.
